Europäisches Patentamt

European Patent Office

Office européen des brevets

(11) Publication number: **0 270 726**
**A2**

## (12) EUROPEAN PATENT APPLICATION

(21) Application number: **87101598.8**

(22) Date of filing: **06.02.87**

(51) Int. Cl.⁴: **B30B 11/22** , A01F 15/00

(30) Priority: **14.11.86 GB 8627262**

(43) Date of publication of application:
**15.06.88 Bulletin 88/24**

(84) Designated Contracting States:
**DE ES FR GB IT NL**

(71) Applicant: **DEERE & COMPANY**
**1 John Deere Road**
**Moline Illinois 61265(US)**

(72) Inventor: **Geiser, Jens**
**Hohlstrasse 12**
**D-6660 Zweibrücken(DE)**

(74) Representative: **Collins, Geoffrey Stainton et al**
**c/o Reddie & Grose 16 Theobalds Road**
**London WC1X 8PL(GB)**

(54) **Machine for forming cylindrical bales of crop.**

(57) A machine for forming large cylindrical bales of hay has a baling chamber consisting of a frusto-conical crop receiving portion (18) and a cylindrical crop discharge portion (22). The portions are arranged end-to-end and are defined by rolls which are driven to roll the crop round on itself into the form of a bale. The bale is compacted in the discharge portion by being forced by incoming crop against an abutment plate (68) which is hydraulically controlled and which yields as the bale advances. The bale is wrapped with twine from a tying device (74) and severed by a cutter (76) before being released through a gate (30). The whole operation is continuous.

FIG. 3

## Machine for forming cylindrical bales of crop

This invention relates to a baling machine for forming cylindrical bales of crop.

Machines, towed by a tractor, for forming large cylindrical bales of hay (so called "round balers") are well known. The size of the bales is around 1.5 or 2 metres in diameter and in length. As the machine advances, the crop is removed from a windrow by a pick-up mechanism and delivered rearwardly to a baling chamber where it is rolled into a bale between rolls or belts. The completed bale is tied with twine to maintain its shape and is discharged through a gate formed by a rear portion of the machine. One such machine is described in our EP-A-0 151 665.

The feeding of crop to the chamber needs to be halted during tying and discharge, and various proposals have been made to render the process continuous. Basically these involve the provision of an additional chamber which is ahead (in the direction of travel of the machine) of the main baling chamber. This additional chamber can be closed off from the main chamber and so crop can continue to be fed to the former whilst the final steps of the baling procedure are being carried out in the main chamber. After bale discharge, the additional chamber is opened to the main chamber and crop then transferred from it to the main chamber. A machine of this type is described in our EP-A-0 149 368.

A machine which produces a small diameter rod-shaped product of compacted crop is proposed in DE-A-1 948 555. It has a compacting chamber consisting of a frusto-conical portion opening at its larger end into a cylindrical portion, the portions being defined by driven rolls. Crop is fed into the frusto-conical portion and finally discharged axially at the end of the cylindrical portion. The process is continuous and the portions are always open to one another there being no necessity to close one off from the other, and therefore the arrangement is simple. However, if large diameter products of bale size were produced by the machine they would tend to be loosely formed and therefore to lose their shape during handling.

The present invention enables a large cylindrical bale of crop of more enduring shape to be produced by a simple machine with a chamber comprising a frusto-conical portion and a cylindrical portion, defined by rolls.

According to the present invention the baling machine has: a baling chamber comprising a frusto-conical crop receiving portion and a cylindrical crop discharge portion arranged end-to-end with the larger end of the receiving portion opening into the discharge portion, the portions being defined by rolls arranged to roll the crop into a bale and rolls of the receiving portion being driven; an abutment device for the bale in the discharge portion which yieldably resists bale movement in the lengthwise direction thereof; and a cutter arranged to sever the bale.

The abutment device serves for compaction of the bale which is forced by incoming crop against it so that the bale is a firmer and more easily handled product, but preferably for this latter purpose apparatus is provided for enabling the bale to be wrapped with twine or other tying material comprising a holder for the material and a guide arranged to supply the tying material between neighbouring rolls of the discharge portion to the outer surface of the bale for wrapping round the bale.

The abutment device can include an abutment plate in the form of a hydraulic plunger or ram plate movable in the cylindrical crop discharge portion. The completed bale can be discharged from the machine either through a gate in the discharge portion or through its downstream end with the abutment plate withdrawn a sufficient distance from that end to permit passage of the bale between the press and the end.

In order to enable smooth advancement of crop from the receiving portion to the discharge portion, the portions desirably share a common axis which may extend upwardly so that the crop is raised during its passage through the portions from a low level at which it receives crop to a high level at which the crop is discharged into a waggon or onto the ground. The angle of the axis to the horizontal can be in the range 10° to 30° and preferably 15° to 20°.

An embodiment of the invention will now be described with reference to the accompanying diagrammatic drawings in which:

Fig. 1 shows from above a baling machine drawn by a tractor along a windrow of hay;

Fig. 2 is a view looking from the rear in Fig. 1;

Fig. 3 is a detailed plan view of the machine in Fig. 1 with certain rolls omitted for the sake of clarity;

Fig. 4 is a detailed view similar to Fig. 3 but from the rear of the machine;

Fig. 5 is a section on the line V - V of Fig. 4;

Fig. 6 is a section on the line VI - VI of Fig. 3; and

Fig. 7 shows a bale cutter of the machine in relation to a bale in end view.

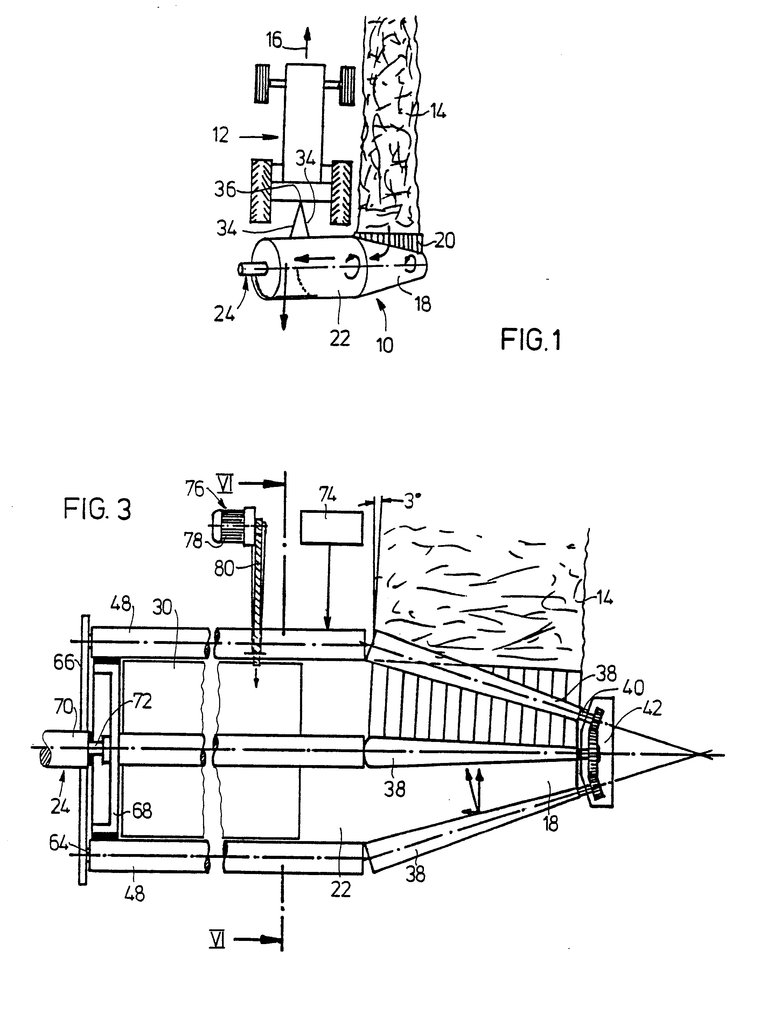

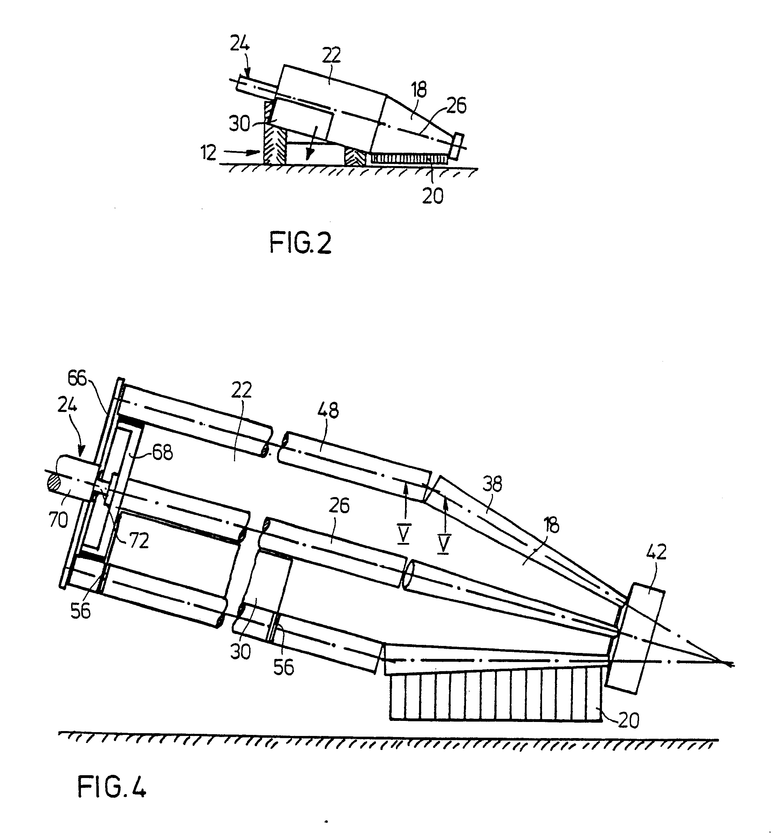

In Figures 1 and 2 a baling machine 10 is drawn by a tractor 12 along a windrow 14 of hay in the direction of arrow 16. The machine 10 has a baling chamber consisting of a frusto-conical crop receiving portion 18, to which crop is fed by a pick-up 20 which lifts the hay from the windrow 14, and a cylindrical crop discharge portion 22 into which the larger end of the portion 18 opens. An abutment device 24 is arranged in the discharge portion 22 and is shown in its withdrawn position at the distal or downstream end thereof. The portions 18, 22 share a common axis 26 which runs laterally of the windrow 14 and the tractor 12 and which is at an angle of about 15° to the horizontal so that the hay is raised from pick-up level and delivered as a cylindrical bale through a gate 30 on the underside of the upper end of the discharge portion 22. Crop flow is indicated by (unnumbered) arrows in Figures 1 and 2.

The machine 10 will now be described in more detail.

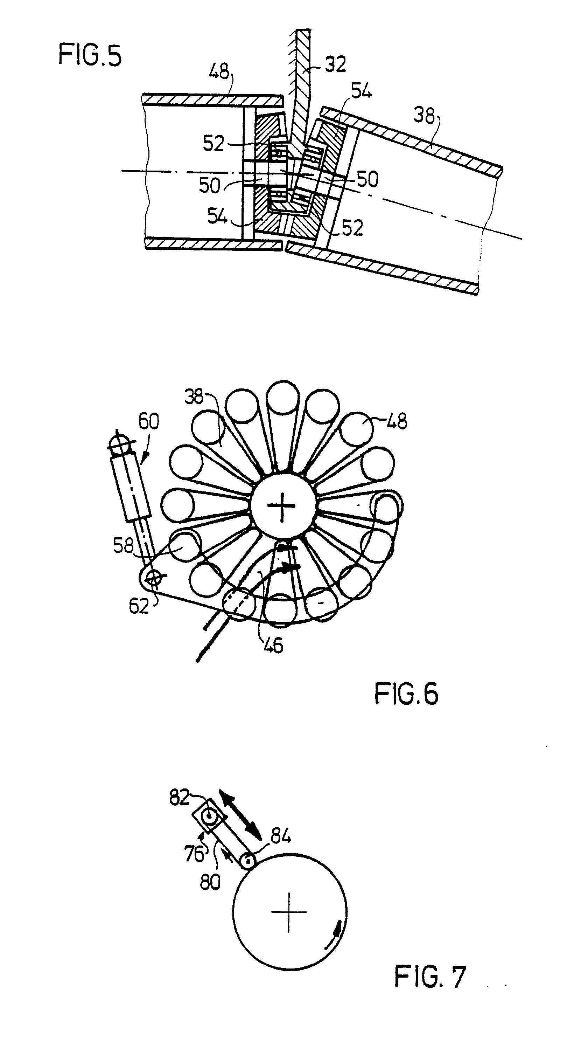

It has a support frame 32 which is shown only in Fig. 5 and only in part and which includes two drawing beams 34 extending forwardly in a converging manner to meet at a point of attachment 36 to the tractor 12. Power is delivered from the tractor by a conventional power take-off shaft (not shown). The frame 32 not only supports the crop receiving and discharge portions 18, 22 but also the pick-up 20 which in the working position of Fig. 1 straddles the windrow 14. The length of the pick-up 20 is coterminous with that of the receiving portion 18 and it extends below the forward half of this portion as best seen in Figures 3 and 4.

The crop receiving portion 18 is formed by some fifteen driven rolls 38. Although these are shown in Fig. 6, many are omitted in Figures 3 and 4 in order that the overall structure can be more easily discerned. The rolls 38 are disposed so as to follow geometrically the contour of a frusto-cone (each roll running from end to end of the frusto-cone) and are themselves frusto-conical, the smaller diameter ends of the rolls being at the smaller diameter upstream end of the receiving portion 18. The rolls 38 are rigidly attached to trunnion shafts 40, at their upstream ends, which shafts extend into a gearbox 42 in which they are splined to meshing drive gears 44 driven from the power take-off shaft of the tractor 12. The shafts 40 are carried, in a manner not shown, by the support frame 32. The fifteen rolls 38 are spaced regularly apart except that a gap where a roll might otherwise fit is left between two neighbouring rolls on the underside associated with a rearward discharge portion of the pick-up 20 to provide an inlet 46 (Fig. 6) for crop to be delivered into the receiving portion 18 from the pick-up.

The crop discharge portion 22 is also formed from rolls, i.e. rolls 48, this time numbering sixteen in all. The sixteenth roll is in a position corresponding to the inlet 46 and is an idler roll, whilst the remaining fifteen rolls are aligned with those in the crop receiving portion 18. They follow the contour of a cylinder (each roll running from end to end of the cylinder except as will be explained below in relation to the gate 30 and to an aperture (not shown) to permit bale cutting) and are driven by the rolls 38 via a transmission arrangement, shown in Fig. 5. Associated ends of the rolls 38, 48 have axial trunnion shafts 50 journalled in bearings 52 carried by the support frame 32. The shafts 50 are splined inwardly of the bearings 52 to bevel gears 54 which encompass the bearings and which mesh on the radially inner side of the rolls so transmitting the drive from the rolls 38 to the rolls 48.

The rolls 48 in the lower half of the discharge portion 2 are carried on a cradle consisting of a pair of spaced apart semi-circular arms 56 (Figures 4 and 6) which can swing about a pivot axis 58 under the action of a hydraulic piston and cylinder unit 60 of which the piston is connected to one of the arms 56 at point 62 below the pivot axis 58. The arrangement forms the gate 30 which can be swung between its closed working position as shown in Fig. 6 and an open position (not shown) in which a completed bale can pass through it for discharge.

The portions of the rolls 48 which are carried by the arms 56 must of course be free of the remaining portions of these rolls when they are swung to the "gate open" position. They can be designed to lock onto the remaining portions at the closed position or the arrangement can be such that they are always free of the remaining portions and therefore always freely rotatable rather than driven. The mounting of the rolls 48 will thus be in accordance with the particular arrangement which is adopted. For example, at the downstream or distal end of the discharge portion 22 the rolls 48 can be journalled via further trunnion shafts 64 in an end plate 66 which in turn is carried, in a manner not shown, by the support frame 32.

An important feature associated with the discharge portion 22 is the abutment device 24. This comprises an abutment plate or ram plate 68, within the cylinder formed by the rolls 48, and a hydraulic piston and cylinder unit of which the cylinder 70 is rigidly attached to the end plate 66 the cylinder extending through it at its centre, and the piston 72 carries the ram plate 68 which is journalled to it so as to be freely rotatable.

The hydraulic piston and cylinder unit yieldably resists bale movement through the discharge portion 22 by way of the ram plate 68 and is arranged so that there is either a constant or varying resistance of the plate to the advancing bale. A constant resistance can be provided simply and inexpensively. On the other hand in order to ensure greater uniformity in the density of completed bales it is desirable to vary the resistance in accordance with the conditions obtaining, e.g. the type of crop, the amount of crop passing through the inlet 46, and its physical condition (particularly whether it is wet or dry). These factors affect the resistance of the crop to being baled and thus the desired hydraulic pressure in the piston and cylinder unit.

A bale tying device 74 indicated purely diagrammatically comprising a holder for twine or other tying material and a guide (not individually shown) is mounted on the support frame 32 exteriorly of the discharge portion 22 (in the region of the aperture (not shown) mentioned above) at its upstream end at the leading side with respect to the direction of travel of the machine so as to supply twine continuously through the aperture to the outer surface of the bale being formed to wrap round it in order to secure the form of the bale.

A cutter 76 (Fig. 7) is similarly positioned on the support frame 32, but just downstream of the tying device 74. The cutter 76 comprises an electric motor 78 and a continuous cutting chain 80 trained over a pair of spaced apart sprockets 82, 84 of which sprocket 82 is driven by the motor. The cutter 76 is movable progressively (on a radial path in Fig. 7) between an inoperative position at which it is clear of the discharge portion 22 and a "cut completed" position in which it passes through the aperture to the axis 26. The cutter 76 can also move lengthwise of the discharge portion 22 to vary the position of the cut it makes when desired.

In operation the machine functions as follows. Hay from the windrow 14 is delivered rearwardly and upwardly through the inlet 46 of the crop receiving portion 18 where it is rolled round upon itself by the rolls 38, driven through the gearbox 42, in a clockwise direction when viewed from right to left in Fig. 1, the rolls turning in an anti-clockwise direction. The crop also has a component of motion from right to left imparted to it by virtue of the frusto-conical form of the portion 18. Crop enters the portion along its entire length.

The crop passes smoothly from the receiving portion 18 to the discharge portion 22 and it reaches the ram plate 68 at the latter's starting position in the portion 22 just to the left of the cutter 76 in Figure 3, the crop still turning in the clockwise direction by virtue of the rotation of the rolls 48. The ram plate 68 simply turns with the crop since it is free to do so. With the tractor still advancing, the pick-up 20 still gathering and feeding the hay, and twine still being supplied, the crop is increasingly forced against the plate 68 until it overcomes the hydraulic pressure afforded by the unit 24 (assuming this is arranged simply as referred to above to provide merely a constant resistance to the advancing bale). The plate 68 yields but continues to resist the bale, and finally the plate 68 reaches the position shown in Figures 3 and 4.

The cutter 76 is then triggered automatically into operation moving from its inoperative position gradually to its "cut completed" position severing the completed bale. The cutter 76 automatically withdraws, and the gate 30 is triggered to open whereupon the bale falls through the gate onto the ground whence it can be loaded onto a waggon or other bale transporter for removal. The piston and cylinder unit 24 operates to return the plate 68 to its starting position, and the sequence just described is repeated to make another bale.

There are many ways in which the above described design can be altered. For example, the press 24 can be arranged so that the ram plate 68 can be completely withdrawn from the end of the portion 22 to provide a sufficient gap through which the completed bale can be discharged endwise of the portion 22. This avoids the necessity to provide the gate 30.

The cutter 76 serves to sever both the bale and the twine, but if desired separate cutters can be used.

Although it is preferred positively to drive the rolls 48 of the discharge portion 22, they can be simply idler rolls.

The whole operation is continuous as the baling chamber is constantly fed with crop whilst baling, tying and discharge are taking place, and yet a reasonably firm bale can be produced in a simple manner.

## Claims

1. A baling machine for forming cylindrical bales of crop characterised in that the machine (10) has: a baling chamber comprising a frusto-conical crop receiving portion (18) and a cylindrical crop discharge portion (22) arranged end-to-end with the larger end of the receiving portion (18) opening into the discharge portion (22), the portions being defined by rolls (38, 48) arranged to roll the crop into a bale and rolls (38) of the receiving portion (18) being driven; an abutment device (24) for the bale in the discharge portion (22) which yieldably resists bale movement in the lengthwise direction thereof; and a cutter (76) arranged to sever the bale.

2. A baling machine according to claim 1 characterised in that the abutment device (24) is arranged to offer constant resistance to bale movement.

3. A baling machine according to claim 1 characterised in that the abutment device (24) is arranged to offer resistance to bale movement which varies in dependence on the resistance of the crop to being baled.

4. A baling machine according to any preceding claim characterised in that the abutment device (24) comprises a hydraulic piston and cylinder unit (70, 72) and an abutment plate (68) connected thereto.

5. A baling machine according to claim 4 characterised in that the abutment plate (68) is freely rotatable.

6. A baling machine according to any preceding claim characterised in that rolls (38, 48) in both said portions (18, 22) are drivable.

7. A baling machine according to claim 6 characterised in that rolls (48) in the discharge portion (22) are drivable via rolls (38) in the crop receiving portion (18).

8. A baling machine according to any preceding claim characterised in that rolls (38) of the receiving portion (18) are drivable via a gearbox (42) mounted at its smaller diameter end.

9. A baling machine according to any preceding claim characterised in that the discharge and crop receiving portions (22, 18) share a common geometrical axis (26).

10. A baling machine according to claim 9 characterised in that the axis (26) is at an angle to the horizontal in the range 10° to 30°.

11. A baling machine according to claim 10 characterised in that the range is 15° to 20°.

12. A baling machine according to any preceding claim characterised in that the rolls (38) of the receiving portion (18) are frusto-conical with their larger diameter ends at the larger diameter end of the receiving portion (18).

13. A baling machine according to any preceding claim characterised in that the machine (10) has a pick-up (20) for crop in a windrow (14), the pick-up (20) being disposed below the receiving portion (18) so as to supply crop directly to the underside thereof between neighbouring rolls (38) of the portion (18).

14. A baling machine according to any preceding claim characterised in that the cutter (76) is mounted for movement, in a direction which is radial with respect to the discharge portion (22), between an inoperative po sition outside the discharge portion (22) and a cut completed position at the axis (26) of the discharge portion (22).

15. A baling machine according to claim 14 characterised in that the cutter (76) is mounted for movement lengthwise of the discharge portion (22).

16. A baling machine according to claim 4 or claim 4 and any of claims 5 to 15 characterised in that the abutment plate (68) can be withdrawn from the discharge portion (22) sufficiently to enable a completed bale to be discharged endwise of the portion (22).

17. A baling machine according to any of claims 1 to 15 characterised in that the discharge portion (22) has a discharge gate (30) therein on its underside for the completed bale.

18. A baling machine according to claim 17 characterised in that the gate (30) comprises a cradle swingable between a gate open and gate closed position and portions of a plurality of said rolls (48) defining the discharge portion (22) which are mounted on the cradle.

19. A baling machine according to claim 18 characterised in that the gate (30) includes a piston and cylinder unit (60) attached to the said cradle for swinging it between the open and closed position.

20. A baling machine according to any preceding claim characterised in that the machine (10) has a bale tying device (74), comprising a holder for tying material and a guide, arranged to supply the tying material between neighbouring rolls (48) of the discharge portion (22) to the outer surface of a said bale for wrapping round the bale.

FIG.1

FIG. 3

FIG.2

FIG.4

FIG.5

48

32

54

38

52

50

50

54

52

60

38

48

58

62

46

FIG.6

82

76

84

80

FIG. 7